# EUROPEAN PATENT SPECIFICATION

(11) **EP 1 186 171 B1**
(45) Date of publication and mention of the grant of the patent: **05.11.2003**
(21) Application number: 00941203.2
(22) Date of filing: 02.06.2000
(51) Int. Cl.: H04N 7/16, A63H 3/00

(54) **NETWORKING SMART TOYS**
INTELLIGENTE SPIELZEUGE, DIE ÜBER EIN NETZWERK VERBUNDEN SIND
MISE EN RESEAU DE JOUETS INTELLIGENTS

(30) Priority: 03.06.1999 US 137616 P
(43) Date of publication of application: 13.03.2002
(73) Proprietor: Opentv, Inc., Mountain View, CA 94043-4005 (US)
(72) Inventor: DUREAU, Vincent, Palo Alto, CA 94306 (US)
(74) Representative: Freeman, Jacqueline Carol
(86) International application number: US0015294
(87) International publication number: WO00076216

(56) References cited:
- WO-A-97/30549
- WO-A-97/47135
- WO-A-99/00979
- US-A- 5 191 615
- US-A- 5 733 131

## Description

### BACKGROUND OF THE INVENTION

### 1. Field of the Invention

The present invention relates generally to smart toys and more specifically to a system and method for networking smart toys with a data distribution system such as an interactive television broadcast network.

### 2. Description of the Relevant Art

With the evolution of computers and electronic devices, more and more uses are being discovered for the technology which they embody. This technology is being integrated into an increasing number of products, some of which might have been considered too mundane to merit technologically innovative features until recently.

One example of such a product is a smart toy. Smart toys may be thought of as toys that incorporate electronic devices in order to give the tays features which make the toy appear to be smart, or which are beyond the capabilities of toys that do not incorporate these electronic devices. For example, a number of interactive dolls have been introduced. These dolls can perform such activities as speaking, singing songs or playing games. The dolls may perform these activities in response to physical stimuli (e.g., squeezing the doll's band) or in response to predetermined signals generated by an associated device.

Many of these smart toys, however, are limited in their activities. Some are preprogrammed to perform certain activities and cannot be reprogrammed or upgraded to perform additional activities. Some may be upgraded by connecting the toys to servers maintained by their manufacturers (e.g., via electronic bulletin boards or web sites). These connections to the servers are established using a bi-directional, point-to-point link, such as a modem link in a personal computer, so that a toy can request new programming from the server and then receive the new programming over the same line.

These smart toys may be limited in their utility because they cannot be upgraded or because the procedures for upgrading or reprogramming the toy are too difficult for some users. A child, for example, may be unable to understand instructions for upgrading a toy. The child may not even be able to read the instructions. Further, even a child who can understand the instructions for upgrading the toy may not understand the procedures for using a personal computer to establish a connection to the manufacturer's server. It may also be the case that the child does not have permission to do so. Still further, although it may be possible to reprogram the toy, it typically is not possible to control the downloaded information and to filter the programming to select only that programming which is appropriate for a particular user.

US 5,733,131 describes a one-way communication system for transmitting control signals to an entertainment or educational device via a radio signal broadcast facility utilizing a paging system protocol. Control messages are collected by the device without user intervention. In one embodiment, control signals include address information indicating particular receiving stations. The control signals are broadcast from a radio broadcast facility and received by a. radio receiver within an educational or entertainment device. Received control signals which are addressed to the receiving device are accepted and may cause the receiving device to take some particular action. In one embodiment, the control signals broadcast from the radio broadcast facility may correspond to, and be timed to coincide with, a separately broadcast television program.

### SUMMARY OF THE INVENTION

One or more of the problems outlined above may be solved by various embodiments of the present invention. According to the present invention there is provided a system comprising:
a receiving station (22) configured to receive a broadcast signal containing program data; and
a programmable device (20) configured to be coupled to said receiving station (22) and to receive said program data from said receiving station (22);
wherein one of said receiving station (22) and said programmable device (20) is configured to select a portion of said program data; and
wherein said programmable device (20) is configured to store said portion of said program data;
wherein said receiving station (22) is configured to transmit a notification signal to said programmable device (20) to indicate that said receiving station (22) is ready to transmit said program data to said programmable device (20) and wherein said programmable device (20) is configured to emit a user-sensible signal to indicate that said programmable device (20) should be brought into communication with said receiving station (22).

In one embodiment, a smart toy works cooperatively with an interactive television system to provide an easy-to-use means for reprogramming the smart toy. The interactive television system includes a broadcast station which transmits data over a broadcast link to a receiving station. The broadcast link is typically unidirectional, although in some instances it may incorporate a return path (the return path is not always connected). Data modules, (e.g., data files or application code) for reprogramming the smart toy are broadcast from the broadcast station to the receiving station. A radio frequency (RF) transceiver in the receiving station communicates the data modules to a corresponding transceiver in the toy. The transceivers provide a means to easily and seamlessly establish a bidirectional link between the receiving station and the toy, through which the toy can be reprogrammed. The system may alternatively incorporate a unidirectional link that transmits data from the receiving station to the toy without any feedback from the toy.

The system can be implemented using any type of programmable toy. For example, computerized board games can be programmed with new questions, role playing games can be programmed with new characters, toy cars can be programmed with new sounds and robots can be programmed with new procedures. The system can also be implemented using programmable devices other than toys. In one embodiment, the system can be used to program a smart remote control which can download information relating to particular television programs. The smart remote control could, for example, download a recipe from a cooking show and allow the user to review the recipe later while actually preparing the dish. In another embodiment, the system could download data (e.g., stock quotes) to a personal digital assistant (PDA) when the PDA is within range of the receiving station.

In one embodiment, the receiving station transmits a notification signal to the smart toy to alert the user that he or she should take a particular action. For example, the user may be notified that a particular television program is about to begin. The user may also be prompted to bring the smart toy within range to establish a communications link for the purpose of downloading programming to the toy.

In one embodiment, the receiving station can transmit information to the smart toy for the purpose of assisting the user to download new programming. This information may consist of signals which cause that the toy to play prerecorded messages, or it may consist of speech data which is converted to audio and played by the toy. The toy may be configured to detect this type of speech data and to simply pass the data through to a speaker, thereby eliminating the need for memory space to store the data prior to playing it back.

In one embodiment, the smart toy can be selectively programmed, even though the programming is downloaded by a unidirectional broadcast channel. The broadcast station can be configured to cyclically transmit programming data in a carousel to provide essentially continuous programming capability. The toy can be configured to filter the broadcast data downloaded by the receiving station and to accept only that programming which meets the filtering criteria. The filtering of the downloaded data may be based on user selections, or it may be based on user preferences stored in the toy itself. These preferences or profiles may be manually entered by the user, or the toy can be configured to build preference data based upon user information, television viewing habits, use of current programming or other factors. In other embodiments, the same type of user preference data may also be created and/or stored in the receiving station or in the server and then and used to filter data at either of these points.

In one embodiment, the smart toy can be used as an input device for the receiving station. The toy may use a transceiver to transmit response data, selection data, user data or other information to the receiving station. The use of transceivers in the smart toy and the receiving station eliminates the need to manually connect the toy to receiving station in order to communicate data to the receiving station. This provides a seamless and intuitive interface between the smart toy and the receiving station.

Still other embodiments are described below.

### BRIEF DESCRIPTION OF THE DRAWINGS

Other objects and advantages of the invention will become apparent upon reading the following detailed description and upon reference to the accompanying drawings in which:
Fig. 1 is an illustration of the operation of the smart toy in conjunction with a set-top box.
Fig. 2 is a block diagram illustrating the flow of data between a broadcast station, a receiving station and a smart toy in one embodiment of the invention.
Fig. 3 is a block diagram of the components of a smart toy in one embodiment of the invention.
Fig. 4 is a block diagram of an interactive television system in one embodiment of the invention.
Fig. 5 is a block diagram of the components of a broadcast station in one embodiment of the invention.
Fig. 6 is a block diagram of the components of a receiving station in one embodiment of the invention.

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the spirit and scope of the present invention as defined by the appended claims.

### DETAILED DESCRIPTION OF THE PREFERRED EMBODIMENTS

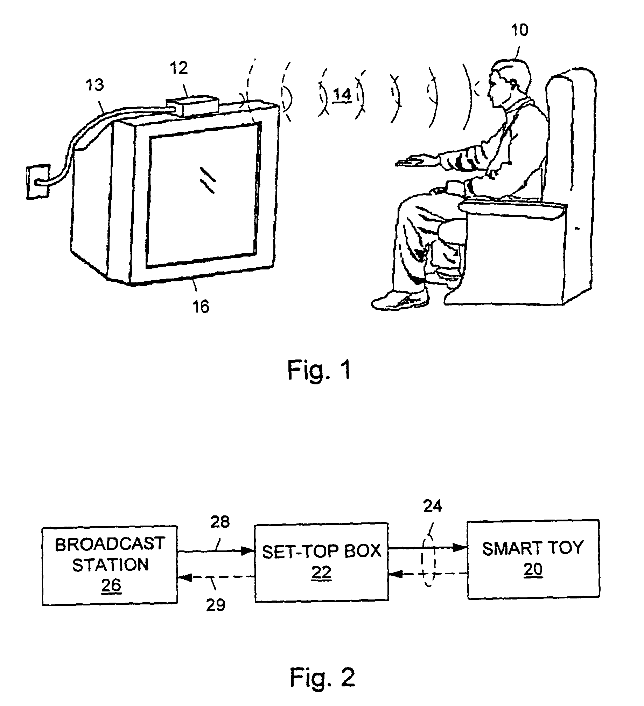

The invention comprises a system and method for programming a smart toy using a broadcast television system. Referring to Fig. 1, one embodiment of the invention is illustrated. Smart toy 10 is depicted as a doll. Smart toy 10 is coupled to a receiver 12 which, in this embodiment, is a set-top box. Receiver 12 accepts a signal via cable 13. The signal comprises interactive television programming which is delivered to cable 13 and receiver 12 by a broadcast network (not shown). The broadcast network will be described in more detail below. Receiver 12 separates the interactive television signal into its various components. These components include audio and video data, receiver data and toy data. The audio and video components of the signal may consist of an ordinary television signal such as an NTSC or other standard-format television signal. The receiver data may consist of control information, interactive applications or other data which can be used by receiver 12 to perform various functions aside from displaying the audio/video portion of the signal and forwarding programming information to the toy. The toy data consists of programming information which is transmitted from receiver 12 to smart toy 10. It should be noted that, in the various embodiments of the invention, the broadcast signal need not include audio, video or receiver data and need not comprise an interactive television signal.

In this embodiment, a programmable device comprising a smart toy 10 is coupled to receiver 12 by an RF transceiver system. The RF transmissions between smart toy 10 and receiver 12 are indicated generally by 14. The figure depicts RF transmissions 14 originating at receiver 12 and propagating to smart toy 10 as solid lines. RF transmissions originating at the smart toy 10 and propagating to the receiver 12 are depicted as dashed lines. Consequently, data and programming may be communicated back and forth between smart toy 10 and receiver 12 without the need to manually connect the two using, for example, a cable which has a connection to the receiver on one end and a receptacle for accepting the smart toy on the other end.

Referring to Fig. 2, a block diagram illustrating the flow of data in the system in one embodiment is shown. In this figure, it can be seen that information is transmitted from set-top box 22 to smart toy 20 via communications link 24. Although the system can function without the transmission of any information from smart toy 20 back to set-top box 22, some embodiments may include a return path in communications link 24 to allow a bidirectional exchange of information as shown by the dashed line in the figure. Broadcast station 26 also transmits information to receiver 22 via a unidirectional broadcast link 28 in this embodiment. Broadcast link 28 provides an efficient means to distribute information to a large number of receivers. Each receiver and toy can filter the broadcast data to achieve selective downloading of particular information, as will be discussed in more detail below. In the depicted embodiment, receiver 22 cannot transmit information to broadcast station 26 using broadcast link 28. In alternate embodiments, however, a return path 29 may be included in order to provide a means for communications from receiver 22 to broadcast station 26. (Because return path 29 is not necessary, it is depicted in the figure as a dashed line.)

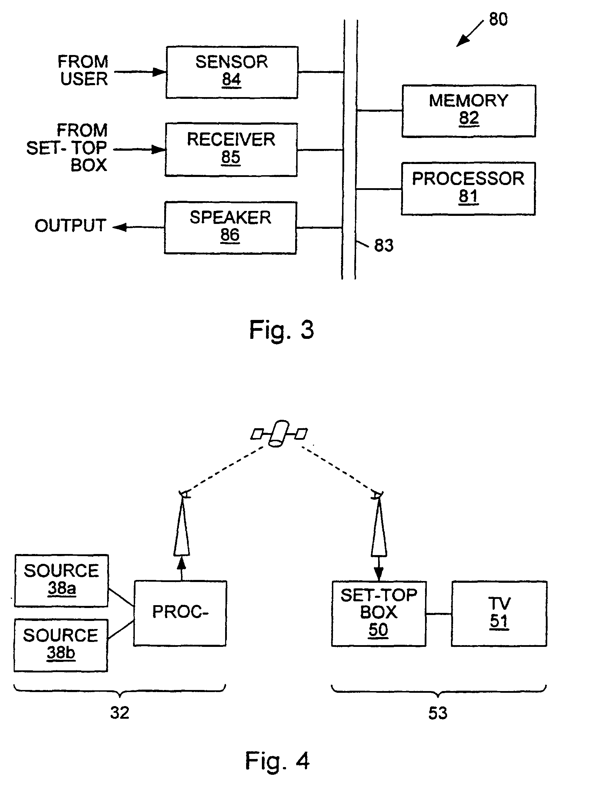

Referring to Fig. 3, a block diagram illustrating the functional components of the smart toy in one embodiment of the invention is shown. The smart toy is designated generally as 80. Smart toy 80 includes a control unit 81 and memory 82, each of which is coupled to bus 83. Control unit 81 may include a microprocessor, microcontroller, digital signal processor (DSP), or some other type of software instruction processing device. Control unit 81 is configured to perform one or more applications which are stored in memory 82. Memory 82 may include memory units which are static (e.g., SRAM), dynamic (e.g., DRAM), volatile or non-volatile (e.g., FLASH), as required to support the functions of the toy. Sensor 84, receiver 85 and speaker 86 are also coupled to bus 83 to provide input and output means. Data can be input via sensor 84 or receiver 85 and the used in the execution of applications by control unit 81. Receiver 85 can also used to input application code. Thus, smart toy 10 can be re-programmed by storing new applications in memory 82 (these new applications can then be executed by control unit 81.) It should be noted that the specific configuration of the components of the smart toy described herein is illustrative and may be modified in other embodiments.

Sensor 84 is a physical switch which allows the smart toy to respond to actions taken by the user of the toy and thereby interact with the user. Sensor 84 is intended to be construed broadly, and may encompass position sensors, contact switches, transducers and any other type of device which can produce a signal for which a response can be generated. ("Signal" as used here is intended to encompass not only the assertion of electrical signals, but also any other indications that a sensor is in a particular state, e.g., an open switch.) Sensor 84 may be electrical or, in some instances, it may be a mechanical sensor. In one embodiment in which the smart toy comprises a doll, sensor 84 may take the form of a contact switch located in the doll's hand. When the doll's hand is squeezed, the switch is closed and the toy performs some resulting action (e.g., talking). It is contemplated that the smart toy may have more than one sensor. The toy may perform a particular action in response to signals from a particular sensor, or the actions of the toy may be based upon a combination of these signals.

In one embodiment of the invention, receiver 85 is an RF transceiver. That is, receiver 85 can both receive and transmit radio frequency signals. Receiver 85 provides a communications link between the smart toy and an information source such as the receiver of the interactive television system. Receiver 85 is used as an input device for data which is received from the receiving station and which is more extensive than the simple data input by actuation of sensor 84. For example, receiver 85 can provide a conduit through which application code can be downloaded into the smart toy. Additionally, as an output device, receiver 85 may transmit signals from the smart toy to the interactive television receiver. This can enable the smart toy to upload user information or initiate the download of new application code. In alternate embodiments, other types of transceivers (e.g., infrared) may be used. Such transceivers may, however, have more limited utility as a result of line-of-sight requirements.

Smart toy 80 includes a speaker 86 for providing information to the user. Speaker 86 is coupled to bus 83 and may be driven by an interactive application executed by control unit 81 or by signals which are simply passed through the toy from receiver 85 to speaker 86. In the former instance, the interactive application may play pre-recorded words or phrases in response to signals generated by sensor 84. The application may even be configured to construct simple sentences. In the second case, which may be referred to as streaming audio, speech data may be passed through the toy in order to provide instructions or other detailed information to the user without the need for large amounts of memory. In other words, the audio data is not stored and replayed, but is instead received by the toy and conveyed immediately to speaker 86 (or possibly to an amplifier). Any audio buffering which may be necessary can be performed by the receiver before the data is transferred to the toy. This feature may be useful, for instance, when a child is attempting to download information to a toy and needs verbal cues to assist him or her in performing this task.

The smart toy includes a number of additional features which are best described in the context of the operation of the overall system. The discussion of these features will therefore be deferred to the portion of the disclosure detailing system operation.

Referring to Fig. 4, an interactive television system in one embodiment of the invention is shown. Broadcast station 32 is coupled to one or more data sources 38. Data sources 38 may be any one of a number of sources which may provide information to broadcast station 32. For example, they may include remote television feeds, videotape recorders, mass storage devices or Internet gateways. Data sources 38 may be coupled to broadcast station 32 by any appropriate means. A remote television feed, for example, may be coupled to the broadcast station by a satellite transmission link, while an Internet gateway is coupled to the broadcast station by means of a modem and an ordinary telephone line.

The receiving station is operatively connected to the broadcast station by a broadcast channel. This broadcast channel can utilize various transmission media. Although Fig. 3 depicts the broadcast channel as a satellite transmission link, it is contemplated that any broadcast medium, including non-satellite, CATV (cable), telco (telephone), MMDS (microwave) and terrestrial transmissions, may be used. Likewise, the broadcast may use various formats, such as digital, switched packet transmissions, or vertical blanking interval (VBI) transmissions. The broadcast channel provides a transmission path which is typically unidirectional, from the broadcast station to the receiving station. The broadcast station and receiving station are also connected by a return path. The return path provides a transmission path which is typically bidirectional, allowing the receiving station to transmit data to the broadcast station and vice versa, and often has very limited bandwidth. The return path may also be used unidirectionally in some systems. The return path typically consists of a pair of modems, one in the receiving station and one in the broadcast station, each connected to a standard telephone line. Other means for establishing a return path, e.g., using a portion of the bandwidth of the broadcast channel, are also contemplated.

Receiving station 53 includes a set-top box 50 and a television 51. Although the term "set-top box" is used herein, it is understood that this term refers to any processing unit for receiving and processing a transmitted signal and conveying the processed signal to a television or other monitor. The set-top box may be in a housing which physically sits on top of a television, it may be in some other location external to the television (e.g., on the side or back of the television or remotely located from the television), or it may be incorporated into the television itself. Set-top box 50 serves to demodulate the signal received from the broadcast station and to separate the application from the audio/video (television program) portion of the signal. The set-top box executes the application and combines the audio and video portions of the television program with video and/or audio generated by the application, as required by the application. The modified television program signal is then passed on to television 51. Television 51 may be a television or a video monitor employing any suitable television format (e.g., NTSC or HDTV), or it may be replaced by other devices, such as a video recorder. Receiving station 53 may also include a return path 52. Return path 52 may be utilized by an application to provide data to the broadcast service provider. The return path is commonly a modem within the set-top box connected to a standard telephone line. A corresponding modem at the broadcast station is also connected to the telephone line to receive data from the receiving station.

In some embodiments, the broadcast medium may comprise a videotape or digital video disc (DVD) recording. Such a recording would contain the same or equivalent programming as is found in the interactive television signal (e.g., audio data. video data. receiver data and or toy data.) In these embodiments, of course, no broadcast station is necessary, and the functions of the receiving station may be implemented in the videotape or digital video disc player. The receiving station would, in this embodiment, receive the broadcast signal from the videotape or digital video disc recording. Such embodiments illustrate that the receiving station may simply be a programming unit, and that the system need not be implemented in a broadcast (e.g., interactive television) network.

While some of the features of the interactive television system are described in the following paragraphs, the interactive television system includes a number of additional features which are best described in the context of its operation in conjunction with the smart toy. The discussion of these features will therefore be deferred to the portion of the disclosure detailing overall system operation.

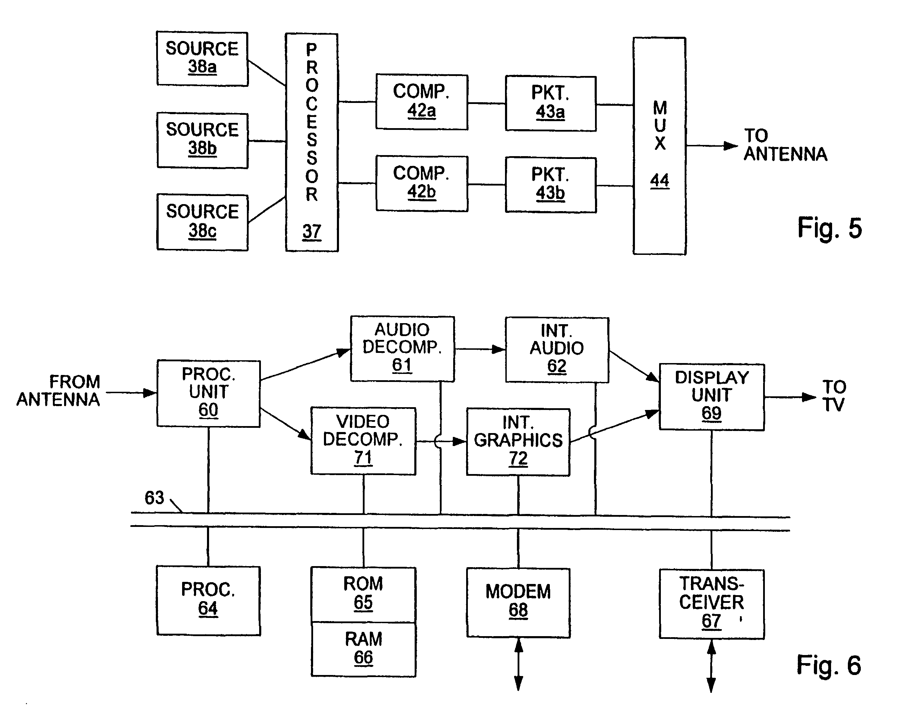

Referring to Fig. 5, a block diagram of the broadcast station in one embodiment of invention is shown. Data sources 38 may provide such different types of information as television programs, interactive application code, Internet web pages, control information or raw data. Typically. television programs are combined with other types of information and transmitted over the broadcast channel to the receiving stations. This combined signal is referred to herein as an interactive television signal. While the embodiments described in this disclosure are primarily configured to operate on a signal which includes television programming, "interactive television signal" is intended to encompass signals which do not necessarily include television programming.

Processing unit 37 of the broadcast station receives data from the respective data sources 38. Processing unit 37 may simply pass through the information provided by data sources 38, or may combine one or more portions of the information. Processing unit 37 may also be configured to modify the information or add its own control data. The information provided by data sources 38 may be compressed by compression units 42 in order to conserve bandwidth. Virtually any other data to be transmitted by the broadcast station can be compressed as well. Compression units 42 may use any suitable compression algorithm. Alternatively, some information may not be easily or effectively compressed, so some of the information may bypass compression units 42. The information is then conveyed to packetization units 43. (Although not shown in the figure, the system may also include scrambling circuitry or other means to control access to the broadcast signal.) Packetization units 43 format the information into packets for transmission over the broadcast channel. The packets of different data sources may then be combined by multiplexer 44, which time-multiplexes the packets before they are transmitted over the broadcast channel.

The broadcast station may include a processor, micro-controller, digital signal processor (DSP), or other type of processing device for selecting data sources, determining how to process information from the data sources, and controlling the other functions of the broadcast station. The processor may be coupled to the other components in the system by an internal bus or by other means. The processor will typically also be coupled to a memory device which stores instructions and data used by the processor. It should also be noted that the components of the broadcast station may be configured in different arrangements than described herein (e.g., some components may be combined or implemented in software.) The other parts of the system (i.e., receiving station and smart toy) may be implemented in varying configurations as well.

In one embodiment, the broadcast station is configured to transmit certain pieces of data in a cyclic manner. For the purposes of this description, these pieces of data are referred to as modules. The modules may include application code, web pages, or any other kind of data. Because the modules are transmitted cyclically, a set of modules which is repetitively transmitted is often referred to as a carousel. The modules of a carousel are typically transmitted in combination with television programming. One or more of the modules may be related to the content of this television programming. As a result, a user who is watching a television program may receive applications which are executed during the program to promote user interaction with the program, to provide particular signals during the program, or to perform other actions related to the program. In other instances, of course, modules may be completely unrelated to the television program (or other information) with which they are transmitted to the user.

Referring to Fig. 6, a block diagram of the set-top box in one embodiment of invention is shown. The various components of the set-top box are each coupled to system bus 63 and are configured to receive control signals from control system 64. It is contemplated that these and the other components of the set-top box may also be directly interconnected or consolidated into one or more physical units, as a matter of design choice. It is also contemplated that the functions of the set-top box components may be distributed among the components in a manner different from that described herein, as a matter of design choice.

As noted above, the audio/video stream is typically compressed prior to transmission by the broadcast station using a compression algorithm such as one of the Motion Picture Expert Group (MPEG) compression standards. The transmission signal from the broadcast station arrives at receiving station 53. The transmission signal is fed to set-top box 50 and input to signal processing unit 60. Signal processing circuit 60 breaks down the transmission signal into component parts such as the audio portion of the signal, the video portion of the signal and interactive applications which may have been injected into the signal at the broadcast station prior to transmission. The audio portion of the signal is routed to audio decompression unit 61. Audio decompression unit 61 then reconstructs the audio portion of the television program. The video portion of the signal is routed to video decompression unit 62, where the video portion of the television program is reconstructed. The outputs of audio and video decompression units 61, 62 are connected to interactive audio unit 71 and interactive graphics unit 72, respectively. Interactive graphics unit 72 may overlay interactive graphics generated by interactive applications onto the broadcast video and route the combined video to display unit 69. Interactive audio unit 71 may combine audio generated by interactive applications with the broadcast audio and direct the combined audio to display unit 69, which formats the audio and video signals and produces an output signal for a television.

The set-top box also has a transceiver 67 coupled to bus 63. In this embodiment, transceiver 67 consists of an RF transceiver which is configured to communicate with the transceiver within the smart toy. The two transceivers form a communications link between the set-top box and the toy through which data and programming may be exchanged. Transceiver 67 may transmit information to or from control system 64, or it may be configured to allow the information to simply pass through the set-top box, effectively establishing a link between the toy and the broadcast station. For example, speech data may be downloaded from the broadcast station, through the set-top box and to the toy. This allows the set-top box to be configured with a memory system which is too small to hold all of the data being downloaded (which may consist of one or more very large files.) The set-top box may nevertheless be able to buffer some of the speech data to enable continuous transmission of the data to the toy. Likewise, the toy may be configured to allow information such as speech data to be passed through to a speaker without the need to store the data (hence, without the need for the corresponding memory space.)

Control system 64 may include a microprocessor, micro-controller, digital signal processor (DSP), or some other type of software instruction processing device. Control system 35 is coupled to read-only memory (ROM) 65 and random-access memory (RAM) 66 through system bus 63. When the set-top box is turned on, control system 64 executes operating system code which is stored in ROM 65. The operating system code of the set-top box executes in the same manner as the operating system code of a typical personal computer (PC) and enables the set-top box to perform interactive functions through the execution of application code. The set-top box also includes modem 68, which provides a return path by which viewer data can be transmitted to the broadcast station.

Interactive applications may require that the audio and video portions of the television program be combined with interactive graphics and/or audio before they are transmitted to television 51. Control system 34 may therefore transmit control signals to interactive audio and graphics units 71, 72 in order to combine the audio and video of the television program with the interactive audio and video for output to display unit 69 and television 51. The function of combining of the audio and video of the interactive application and the television program may be allocated to the interactive audio and graphics units 71, 72, the display unit 69, the decompression units 61, 62, the control system 64, or one or more other components, depending on the design of the particular set-top box. Input which may be required by the interactive applications can be provided through the smart toy via its communications link to the set-top box.

The system described above provides an easy-to-use and intuitive interface between a smart toy and a source of programming information. In one embodiment, programming information is broadcast from a broadcast station to a receiving station and is then transmitted from the receiving station to the smart toy. Thus, the receiving station functions as a programming unit for the toy. Because the system utilizes RF transceivers to transmit the programming information from the receiving station to the smart toy, the user does not have to physically connect the toy to the receiving station. If the toy is within the transmitting range of the receiving station, the toy is in communication with the receiving station and can receive programming information. The toy can therefore transition seamlessly from normal play to a download mode. This feature is particularly useful when the user is a child and may not be able to connect wires or cables between the toy and the receiving station. Additionally, because a toy which must be connected by wires to a download device presents a risk of injury to a child who becomes entangled in the wires, the use of a wireless link for downloads is inherently safer for the child. (Although it may be preferable to use a wireless transceiver, it should be noted that some embodiments may use a physical, e.g., wire, connection between the toy and the receiving station.)

The use of a broadcast network (e.g. an interactive television system) to distribute programming information for the smart toy eliminates the need to establish a point-to-point connection with a manufacturer in order to download this information. The user does not need a personal computer to establish the download link and does not have to be concerned with disruptions caused by busy telephone lines or heavy Internet traffic. The broadcast network also allows transmission equipment and bandwidth to be shared. Further, because programming information is broadcast to the user on an existing television network, connecting to the programming unit (i.e., the receiving station) is essentially effortless for the end user (i.e., the user of the toy.)

Although connecting to the programming unit may be effortless, some users may require assistance to initiate or control downloading of data to the toy. Several features are incorporated to provide this assistance. One of these features is a notification function. When the receiving station has data to be downloaded, it may transmit a notification signal. If the toy is within range of the receiving station, this signal will cause the toy to take a corresponding action to notify the user that the data should be downloaded. The toy may emit a sound (e.g. a beep) or play a prerecorded message indicating that the toy should be brought within the download range of the receiving station. (It should be noted that the notification signal may have a substantially greater range than the download signal.)

This feature may also be used to notify the user that a particular television program is being broadcast. In one embodiment, either the receiving station or the toy could be programmed to provide notification of the program to the user based on predetermined and/or preprogrammed information such as program guides, current time, time zones, zip codes or area codes. The receiving station and/or toy can be configured to download data to the toy while the user watches the television program. As noted above, programming or data can be downloaded to the receiving station or toy to assist the user in controlling the download. This assistance may take the form of audio cues (e.g., streaming through the toy) or visual cues (e.g., text or graphics overlaid on the television program).

In one embodiment, programming information is transmitted over the broadcast network in a cyclical manner. This can eliminate the need for a return path from the receiving station to the broadcast station. Because all of the available programming information is transmitted periodically, there is no need for the receiving station or the toy to send requests for particular programming information to the broadcast station (i.e. programming source.) In other words, at particular intervals, each application module or other piece of data will be broadcast again, whether it is requested/needed or not. The information needed by a particular toy is selected locally by accepting only particular pieces of information and discarding the rest. The elimination of requests for particular modules eliminates the need for a return path through which the receiving stations can communicate with the broadcast station. Further, the elimination of the need to monitor such requests and provide responses thereto may substantially reduce the load on the broadcast station and thereby improve performance.

A potentially large number of program, data or other modules can be repetitively broadcast by the broadcast station. These modules may contain data designed for many uses. The data may be intended for use in interactive television applications or for use in devices other than smart toys. If such data is being broadcast, it is necessary to provide a means for selectively downloading or selectively storing particular ones of these modules which are intended to be downloaded to the smart toy. Even if all of the modules are designed for downloading to the smart toy, some of the modules may be more useful or more appropriate for particular users. For example, interactive speech data which is designed for a four-year old may be more sophisticated than speech data designed for a two-year old. It is therefore useful to provide a means for selectively downloading or receiving particular ones of the modules that are designed for the smart toy.

One way to selectively download modules is to construct user preferences or profiles based on explicitly entered user information and/or historical use information. An example of explicitly entered user information would be a child's age. As indicated above, modules which are appropriate for a four-year old may not be appropriate for a two-year old. Thus, although the user may not explicitly select particular modules to be downloaded, the modules may be filtered to effectuate a download of only age-appropriate data. An example of historical use data is the number of times a child has played particular games or used particular features of the smart toy. If a child has shown interest in certain games, the broadcast modules may be filtered to download only similar games. The toy may also be configured to select the least used programs for deletion to make room for new programming. Depending upon the memory and other resource requirements of such filtering, this may be implemented either in the toy itself or in the receiving station. User data or profile information may be uploaded to the broadcast station if the system incorporates a return path.

Another way to selectively download modules is to use the smart toy as an input device for conveying user selections to the receiving station. In this case, the receiving station may be configured to prompt the user for a response if a particular module is desired. In one embodiment, the smart toy is a doll, and the user may be asked to squeeze the doll's hand if a particular game is desired. As an input device, the smart toy can also allow the user to interact with applications executing on the set-top box, or with television programs or web pages displayed on the television. For example, in one embodiment, the system may act as an internet gateway. If the receiving station has a bidirectional link to the broadcast station (i.e., if there is a return path), the toy may be used as an input device for applications executing at the broadcast station.

The features described above may be illustrated in the following examples.

In one embodiment, the smart toy is a doll used by a child. The doll is programmed to remind the child to watch a specific television program. The doll stores program information, possibly including a program guide and time zone information, and has an internal clock which allows it to provide the reminder at the appropriate time. At the appropriate time, a notification signal is transmitted to the doll, which in turn signals the child to turn on the television program. The doll's reminder to the child may include instructions as to which program to watch or how to tune in the proper channel.

In one embodiment, the receiving station may transmit a notification signal to the doll to indicate that the receiving station is ready to download data to the doll. The doll can then signal the child to take the doll within communication range of the receiving station. The doll may also be configured to transmit a signal to the receiving station in response to the notification signal indicating that the doll is ready to download data. The receiving station may then automatically initiate the download in response to the signal from the doll.

In one embodiment, the receiving station may transmit data unidirectionally to the toy. That is, the toy is not configured in this embodiment to transmit data to the receiving station. When the receiving station is tuned to a channel or a particular show that provides the download data, it transmits the download data regardless of whether the toy is within range or not. If the toy is within range of the receiving station, it downloads the data.

In one embodiment, a user brings the toy within programming range of the receiving station and selects the appropriate broadcast channel. A control application is downloaded to the receiving station at the same time as the data that may be downloaded to the toy. The control application is launched in the receiving station. The control application provides cues to the user for controlling the download. The cues may be text, graphics, audio or video and may provide instructions to the user. The user can select particular data to be downloaded based on the cues. The control application would then filter the data broadcast by the broadcast station, allowing only a portion of the data to be downloaded to the toy.

In one embodiment, the two-way transmits a signal to the receiving station to notify the receiving station that the toy is within range. When the receiving station receives this signal, the receiving station tunes itself to a predetermined channel or web site from which it can retrieve the download data for the toy. The receiving station then downloads this data to the toy. In another embodiment, the receiving station may have already retrieved the data so that it may initiate a download of the data to the toy upon receipt of the notification signal from the toy. In another embodiment, the toy may transmit a signal to the receiving station to indicate the location from which the receiving station should retrieve the data. The toy may also transmit to the receiving station a piece of software which allows the receiving station to communicate with the toy, the user or the server that provides the download data. In any of these embodiments, the transmissions of data and/or signals may take place immediately, or they may be delayed, in order to accommodate unavailable transmission paths (e.g. the receiving station may be tuned to a different channel, or the return path may be unavailable at the time of the download.)

In one embodiment, a child brings the toy within programming range of the receiving station to establish the communications link between the toy and the receiving station. The receiving station transmits streaming speech data to the toy. The streaming speech data is received by the toy and conveyed to a speaker, where it is converted to audible speech. Thus, the speech data does not have to be stored in the toy. The audible speech may provide instructions to the child for completing a download to the toy.

In one embodiment, a broadcast station broadcasts a carousel of modules to a plurality of receiving stations. Each receiving station is in communication with a corresponding smart toy. Each of the smart toys contains a profile for the user of that particular toy. Each toy filters the modules broadcast by the broadcast station and downloads only those modules which match the corresponding user profile. Each of the toys may therefore be programmed differently, even though they are programmed using the same broadcast data.

In one embodiment, the toy tracks the most recent activities of the toy and/or the user and builds a profile based on these activities. The profile is then stored locally (i.e., in the toy.) When data is downloaded to the toy, the data modules which best match the profile are stored in the toy. For example, if the toy is a doll and the child repeatedly asks the doll what time it is, this will be indicated by the profile and the doll will download activities which relate to time. If the child always wants the doll to sing songs, the doll will download songs instead of games. In another embodiment, the toy builds a profile based on information about the user, such as the user's age or where the user lives. In another embodiment, the toy builds a profile based on information such as the "age" of the doll (i.e. how long child has owned the doll).

In one embodiment, the toy may serve as an input device to the receiving station or the broadcast station. If the toy is used as an input device to the broadcast station, a return path is required between the receiving station and the broadcast station. The receiving station may provide a cue to the user requesting input (e.g., a doll saying " if you want me to learn new songs, press my hand"). Download data is then selected locally (i.e., at the toy) according to the user's response. For example, if the child presses the doll's hand, new songs are downloaded. In another embodiment, the toy may be used as an input device for interaction with television programs or web sites.

In one embodiment, the toy can be used to upload information to the receiving station or broadcast station. For example, information about the toy can be uploaded to the receiving station and the receiving station may use this information to generate an animation of the toy which is displayed on the television. This animation may reflect a number of the toy's characteristics, such as its "age" or its favorite activities. User information such as profile data may also be uploaded to the receiving station or the broadcast station for filtering downloads or customizing program content which is displayed on the television.

While the present invention has been described with reference to particular embodiments, it will be understood that the embodiments are illustrative and that the invention scope is not limited to these embodiments. Many variations, modifications, additions and improvements to the embodiments described are possible. These variations, modifications, additions and improvements may fall within the scope of the invention as detailed within the following claims.

## Claims

1. A system comprising:
a receiving station (22) configured to receive a broadcast signal containing program data; and
a programmable device (20) configured to be coupled to said receiving station (22) and to receive said program data from said receiving station (22);
wherein one of said receiving station (22) and said programmable device (20) is configured to select a portion of said program data; and
wherein said programmable device (20) is configured to store said portion of said program data;
wherein said receiving station (22) is configured to transmit a notification signal to said programmable device (20) to indicate that said receiving station (22) is ready to transmit said program data to said programmable device (20) and wherein said programmable device (20) is configured to emit a user-sensible signal to indicate that said programmable device (20) should be brought into communication with said receiving station (22).

2. The system of claim 1 wherein said one of said receiving station (22) and said programmable device (20) is configured to select said portion of said program data according to a set of stored user preferences and to discard the remainder of said program data.

3. The system of claim 2 wherein said one of said receiving station (22) and said programmable device (20) is configured to construct said set of stored user preferences.

4. The system of claim 1 further comprising a broadcast station (26) configured to transmit said broadcast signal, wherein said broadcast station (26) is configured to cyclically transmit a carousel of modules containing said program data.

5. The system of claim 4 wherein said one of said receiving station (22) and said programmable device (20) is configured to select said portion of said program data without transmitting an indication of said portion of said program data to said broadcast station (26).

6. The system of claim 4 wherein said broadcast station (26) comprises a television broadcast station.

7. The system of claim 1 wherein each of said receiving station (22) and said programmable device (20) includes a transceiver (67, 85) for bidirectional communication between said receiving station (22) and said programmable device (20), and wherein said programmable device (20) is configured as an input device to said receiving station (22).

8. The system of claim 7 wherein said transceivers (67, 85) comprise wireless transceivers.

9. The system of claim 1 wherein said receiving station (22) is configured to transmit instructional cues to said programmable device (20) and wherein said programmable device (20) is configured to provide said instructional cues to a user.

10. The system of claim 9 wherein said instructional cues comprise streaming speech data, wherein said programmable device (20) comprises a speaker (86) and wherein said programmable device (20) is configured to transmit said streaming speech data to said speaker (86) upon receipt of said streaming speech data from said receiving station (22).

11. A method comprising:
broadcasting data to a plurality of receiving stations (22);
receiving said data at one of said receiving stations (22);
selecting a portion of said data;
transmitting a notification signal to a programmable device (20) to indicate that said receiving station (22) is ready to transmit said data to said programmable device (20), and wherein said programmable device (20) is configured to emit a user-sensible signal to indicate that said programmable device (20) should be brought into communication with said receiving station (22);
transmitting said selected portion of said data to said programmable device (20);
programming said programmable device (20) according to said selected portion of said data.

12. The method of claim 11 further comprising a user locally selecting said selected portion of said data.

13. The method of claim 12 wherein said selecting comprises said user manually selecting said selected portion of said data using said programmable device (20) as an input device.

14. The method of claim 11 further comprising filtering said data according to a set of user preferences to select said selected portion of said data.

15. The method of claim 14 further comprising building said set of user preferences.

16. The method of claim 11 wherein transmitting said selected portion of said data to said programmable device (20) is performed using a wireless communications link (24) between said receiving station and said programmable device (20).

17. The method of claim 16 wherein said wireless communications link comprises a bidirectional link.

18. The method of claim 11 wherein broadcasting said data comprises cyclically transmitting a carousel of data modules each of said modules including a portion of said data.

19. The method of claim 18 wherein said broadcasting said carousel of data modules comprises transmitting said data modules via the broadcast channel of an interactive television network.

20. The method of claim 17 further comprising automatically initiating transmission of said selected portion of said data from said receiving station (22) to said programmable device (20) when said programmable device (20) is within range to establish said wireless communications link to said receiving station (22).

21. The method of claim 11 further comprising transmitting one or more cues to said programmable device (20).

22. A programmable toy comprising:
a memory (82) configured to store program data:
a control unit (81) configured to perform one or more actions based on said program data stored in said memory (82); and
a receiver (85) configured to receive a notification signal from a transmitter (67) indicating said transmitter (67) is ready to convey program data to said receiver (85) wherein in response to said receiving said notification signal said receiver is configured to emit a user-sensible signal to indicate that said toy should be brought into communication with said transmitter (67) in order to receive said program data;
wherein said toy is configured to select a portion of said program data and store said portion of said program data in said memory and to discard the remainder of said program data.

23. The system of claim 1, wherein said receiving station (22) is configured to transmit said notification signal with a first range and transmit said program data with a second range, wherein said first range corresponds to a distance said notification signal may be effectively transmitted, said second range corresponds to a distance said program data may be effectively transmitted, and wherein said first range is greater than said second range.

24. The system of claim 23, wherein bringing said programmable device (20) into communication with said receiving station (22) comprises bringing said programmable device (20) within said second range.

25. The method of claim 11, wherein said receiving station (22) is configured to transmit said notification signal with a first range and transmit said program data with a second range, wherein said first range corresponds to a distance said notification signal may be effectively transmitted, said second range corresponds to a distance said program data may be effectively transmitted, and wherein said first range is greater than said second range.

26. The method of claim 25, wherein bringing said programmable device (20) into communication with said receiving station (22) comprises bringing said programmable device (20) within said second range.

## Patentansprüche

1. Ein System, das Folgendes umfasst:
ein Empfangsstation (22), die zum Empfangen eines Programmdaten enthaltenden Rundfunksignals konfiguriert ist; und
ein programmierbares Gerät (20), das so konfiguriert ist, dass es mit der genannten Empfangsstation (22) verbunden wird und die genannten Programmdaten von der genannten Empfangsstation (22) empfängt;
wobei die genannte Empfangsstation (22) oder das genannte programmierbare Gerät (20) so konfiguriert ist, dass sie/es einen Teil der genannten Prograrnindaten auswählt; und
wobei das genannte programmierbare Gerät (20) so konfiguriert ist, dass es den genannten Teil der genannten Programmdaten speichert;
wobei die genannte Empfangsstation (22) so konfiguriert ist, dass sie ein Benachrichtigungssignal zu dem genannten programmierbaren Gerät (20) sendet, um anzuzeigen, dass die genannte Empfangsstation (22) zum Senden der genannten Programmdaten zu dem genannten programmierbaren Gerät (20) bereit ist, und wobei das genannte programmierbare Gerät (20) so konfiguriert ist, dass es ein vom Benutzer wahrnehmbares Signal aussendet, um anzuzeigen, dass ein Kommunikationskontakt zwischen dem genannten programmierbaren Gerät (20) und der genannten Empfangsstation (22) hergestellt werden soll.

2. System nach Anspruch 1, wobei die genannte Empfangsstation (22) oder das genannte programmierbare Gerät (20) so konfiguriert ist, dass sieles den genannten Teil der genannten Programmdaten gemäß einem Satz von gespeicherten Benutzerpräferenzen auswählt und den Rest der genannten Programmdaten verwirft.

3. System nach Anspruch 2, bei dem die genannte Empfangsstation (22) oder das genannte programmierbare Gerät (20) so konfiguriert ist, dass sie/es den genannten Satz von gespeicherten Benutzerpräferenzen konstruiert.

4. System nach Anspruch 1, ferner umfassend eine Sendestation (26), die so konfiguriert ist, dass sie das genannte Rundfunksignal sendet, wobei die genannte Sendestation (26) so konfiguriert ist, dass sie zyklisch ein Karussell von die genannten Programmdaten enthaltenden Modulen sendet.

5. System nach Anspruch 4, bei dem die genannte Empfangsstation (22) oder das genannte programmierbare Gerät (20) so konfiguriert ist, dass sie/es den genannten Teil der genannten Programmdaten auswählt, ohne eine Anzeige des genannten Teils der genannten Programmdaten zu der genannten Sendestation (26) zu senden.

6. System nach Anspruch 4, bei dem die genannte Sendestation (26) eine Fernsehsendestation umfasst.

7. System nach Anspruch 1, bei dem sowohl die genannte Empfangsstation (22) als auch das genannte programmierbare Gerät (22) einen Transceiver (67, 85) für eine bidirektionale Kommunikation zwischen der genannten Empfangsstation (22) und dem genannten programmierbaren Gerät (20) beinhalten, und wobei das genannte programmierbare Gerät (20) als Eingabegerät zu der genannten Empfangsstation (22) konfiguriert ist.

8. System nach Anspruch 7, bei dem die genannten Transceiver (67, 85) Funktransceiver umfassen.

9. System nach Anspruch 1, bei dem die genannte Empfangsstation (22) so konfiguriert ist, dass sie Instruktionshinweise zu dem genannten programmierbaren Gerät (20) sendet, und wobei das genannte programmierbare Gerät (20) so konfiguriert ist, dass es die genannten Instruktionshinweise zu einem Benutzer sendet.

10. System nach Anspruch 9, bei dem die genannten Instruktionshinweise Streaming-Sprachdaten umfassen, wobei das genannte programmierbare Gerät (20) einen Lautsprecher (86) umfasst und wobei das genannte programmierbare Gerät (20) so konfiguriert ist, dass es die genannten Streaming-Sprachdaten nach dem Empfang der genannten Streaming-Sprachdaten von der genannten Empfangsstation (22) zu dem genannten Lautsprecher (86) sendet.

11. Verfahren, umfassend die folgenden Schritte:
Rundsenden von Daten zu einer Mehrzahl von Empfangsstationen (22);
Empfangen der genannten Daten an einer der genannten Empfangsstationen (22);
Auswählen eines Teils der genannten Daten;
Senden eines Benachrichtigungssignals zu einem programmierbaren Gerät (20), um anzuzeigen, dass die genannte Empfangsstation (22) zum Senden der genannten Daten zu dem genannten programmierbaren Gerät (20) bereit ist, und wobei das genannte programmierbare Gerät (20) so konfiguriert ist, dass es ein vom Benutzer wahrnehmbares Signal aussendet, um anzuzeigen, dass ein Kommunikationskontakt zwischen dem genannten programmierbaren Gerät (20) und der genannten Empfangsstation (22) hergestellt werden soll;
Senden des genannten gewählten Teils der genannten Daten zu dem genannten programmierbaren Gerät (20);
Programmieren des genannten programmierbaren Gerätes (20) gemäß dem genannten gewählten Teil der genannten Daten.

12. Verfahren nach Anspruch 11, ferner umfassend einen Benutzer, der örtlich den genannten gewählten Teil der genannten Daten wählt.

13. Verfahren nach Anspruch 12, bei dem das genannte Auswählen umfasst, dass der genannte Benutzer den genannten gewählten Teil der genannten Daten mit dem genannten programmierbaren Gerät (20) als Eingabegerät manuell wählt.

14. Verfahren nach Anspruch 11, ferner umfassend das Filtern der genannten Daten gemäß einem Satz von Benutzerpräferenzen, um den genannten gewählten Teil der genannten Daten auszuwählen.

15. Verfahren nach Anspruch 14, ferner umfassend das Erstellen des genannten Satzes von Benutzerpräferenzen.

16. Verfahren nach Anspruch 11, bei dem das Senden des genannten Teils der genannten Daten zu dem genannten programmierbaren Gerät (20) mit einer Kommunikationsfunkverbindung (24) zwischen der genannten Empfangsstation und dem genannten programmierbaren Gerät (20) erfolgt.

17. Verfahren nach Anspruch 16, bei dem die genannte Kommunikationsfunkverbindung eine bidirektionale Verbindung umfasst.

18. Verfahren nach Anspruch 11, bei dem das Rundsenden der genannten Daten das zyklische Senden eines Karussells von Datenmodulen umfasst, wobei jedes der genannten Module einen Teil der genannten Daten beinhaltet.

19. Verfahren nach Anspruch 18, bei dem das genannte Rundsenden des genannten Karussells von Datenmodulen das Senden der genannten Datenmodule über den Rundsendekanal eines interaktiven Fernsehnetzes umfasst.

20. Verfahren nach Anspruch 17, ferner umfassend das automatische Einleiten des Sendens des genannten gewählten Teils der genannten Daten von der genannten Sendestation (22) zu dem genannten programmierbaren Gerät (20), wenn das genannte programmierbare Gerät (20) innerhalb der Reichweite ist, um die genannte Kommunikationsfunkverbindung mit der genannten Empfangsstation (22) herzustellen.

21. Verfahren nach Anspruch 11, ferner umfassend das Senden von einem oder mehreren Hinweisen auf das genannte programmierbare Gerät (20).

22. Programmierbares Spielzeug, das Folgendes umfasst:
einen Speicher (82), der zum Speichern von Programmdaten konfiguriert ist;
eine Steuereinheit (81), die so konfiguriert ist, dass sie eine oder mehrere Aktionen auf der Basis der genannten in dem genannten Speicher (82) gespeicherten Programmdaten durchführt; und
einen Empfänger (85), der zum Empfangen eines Benachrichtigungssignals von einem Sender (67) konfiguriert ist, das anzeigt, dass der genannte Sender (67) zum Übertragen von Programmdaten zu dem genannten Empfänger (85) bereit ist, wobei der genannte Empfänger so konfiguriert ist, dass er als Reaktion auf den genannten Empfang des genannten Benachrichtigungssignals ein vom Benutzer wahrnehmbares Signal aussendet, um anzuzeigen, dass ein Kommunikationskontakt zwischen dem genannten Spielzeug und dem genannten Sender (67) hergestellt werden soll, um die genannten Programmdaten zu empfangen;
wobei das genannte Spielzeug so konfiguriert ist, dass es einen Teil der genannten Programmdaten auswählt und den genannten Teil der genannten Programmdaten in dem 5 genannten Speicher speichert und den Rest der genannten Programmdaten verwirft.

23. System nach Anspruch 1, bei dem die genannte Empfangsstation (22) so konfiguriert ist, dass sie das genannte Benachrichtigungssignal mit einer ersten Reichweite sendet und die genannten Programmdaten mit einer zweiten Reichweite sendet, wobei die genannte erste Reichweite einer Entfernung entspricht, über die das genannte Benachrichtigungssignal effektiv gesendet werden kann, wobei die genannte zweite Reichweite einer Entfernung entspricht, über die die genannten Programmdaten effektiv gesendet werden können, und wobei die genannte erste Reichweite größer ist als die genannte zweite Reichweite.

24. System nach Anspruch 23, wobei das Herstellen eines Kommunikationskontakts zwischen dem genannten programmierbaren Gerät (20) und der genannten Empfangsstation (22) umfasst, dass das genannte programmierbare Gerät (22) zu einem Ort innerhalb der genannten zweiten Reichweite gebracht wird.

25. Verfahren nach Anspruch 11, bei dem die genannte Empfangsstation (22) so konfiguriert ist, dass sie das genannte Benachrichtigungssignal mit einer ersten Reichweite sendet und die genannten Programmdaten mit einer zweiten Reichweite sendet, wobei die genannte erste Reichweite einer Entfernung entspricht, über die das genannte Benachrichtigungssignal effektiv gesendet werden kann, wobei die genannte zweite Reichweite einer Entfernung entspricht, über die die genannten Programmdaten effektiv gesendet werden können, und wobei die genannte erste Reichweite größer ist als die genannte zweite Reichweite.

26. Verfahren nach Anspruch 25, wobei das Herstellen eines Kommunikationskontakts zwischen dem genannten programmierbaren Gerät (20) und der genannten Empfangsstation (22) umfasst, dass das genannte programmierbare Gerät (20) zu einem Ort innerhalb der genannten zweiten Reichweite gebracht wird.

## Revendications

1. Système comprenant ;
une station de réception (22) configurée afin de recevoir un signal de diffusion contenant des données de programme ; et
un dispositif programmable (20) configuré afin d'être couplé à ladite station de réception (22) et de recevoir lesdites données de programme depuis ladite station de réception (22) ;
dans lequel l'un de ladite station de réception (22) et dudit dispositif programmable (20) est configuré afin de sélectionner une partie desdites données de programme ; et
dans lequel ledit dispositif programmable (20) est configuré afin de mémoriser ladite partie desdites données de programme ;
dans lequel ladite station de réception (22) est configurée afin de transmettre un signal de notification audit dispositif programmable (20) pour indiquer que ladite station de réception (22) est prête à transmettre lesdites données de programme audit dispositif programmable (20) et dans lequel ledit dispositif programmable (20) est configuré afin d'émettre un signal sensible à l'utilisateur pour indiquer que ledit dispositif programmable (20) doit être mis en communication avec ladite station de réception (22).

2. Système selon la revendication 1, dans lequel ledit un de ladite station de réception (22) et dudit dispositif programmable (20) est configuré afin de sélectionner ladite partie desdites données de programme conformément à un ensemble de préférences d'utilisateur mémorisées et de rejeter le reste desdites données de programme.

3. Système selon la revendication 2, dans lequel ledit un de ladite station de réception (22) et dudit dispositif programmable (20) est configuré afin de construire ledit ensemble de préférences d'utilisateur mémorisées.

4. Système selon la revendication 1, comprenant en outre une station de diffusion (26) configurée afin de transmettre ledit signal de diffusion, dans lequel ladite station de diffusion (26) est configurée afin de transmettre cycliquement un carrousel de modules contenant lesdites données de programme.

5. Système selon la revendication 4, dans lequel ledit un de ladite station de réception (22) et dudit dispositif programmable (20) est configuré afin de sélectionner ladite partie desdites données de programme sans transmettre d'indication de ladite partie desdites données de programme à ladite station de diffusion (26).

6. Système selon la revendication 4, dans lequel ladite station de diffusion (26) comprend une station de diffusion de télévision.

7. Système selon la revendication 1, dans lequel chacun de ladite station de réception (22) et dudit dispositif programmable (20) comporte un émetteur-récepteur (67, 85) pour la communication bidirectionnelle entre ladite station de réception (22) et ledit dispositif programmable (20), et dans lequel ledit dispositif programmable (20) est configuré comme dispositif d'entrée pour ladite station de réception (22).

8. Système selon la revendication 7, dans lequel lesdits émetteurs-récepteurs (67, 85) comprennent des émetteurs-récepteurs sans fil.

9. Système selon la revendication 1, dans lequel ladite station de réception (22) est configurée afin de transmettre des messages d'instruction audit dispositif programmable (20) et dans lequel ledit dispositif programmable (20) est configuré afin de fournir lesdits messages d'instruction à un utilisateur.

10. Système selon la revendication 9, dans lequel lesdits messages d'instruction comprennent des trains de données de parole, dans lequel ledit dispositif programmable (20) comprend un haut-parleur (86) et dans lequel ledit dispositif programmable (20) est configuré afin de transmettre lesdits trains de données de parole audit haut-parleur (86) dès réception desdits trains de données de parole depuis ladite station de réception (22).

11. Procédé comprenant:
la diffusion de données vers une pluralité de stations de réception (22) ;
la réception desdites données au niveau de l'une desdites stations de réception (22);
la sélection d'une partie desdites données ;
la transmission d'un signal de notification à un dispositif programmable (20) afin d'indiquer que ladite station de réception (22) est prête à transmettre lesdites données audit dispositif programmable (20), et dans lequel ledit dispositif programmable (20) est configuré afin d'émettre un signal sensible à l'utilisateur afin d'indiquer que ledit dispositif programmable (20) doit être mis en communication avec ladite station de réception (22) ;
la transmission de ladite partie sélectionnée desdites données audit dispositif programmable (20) ;
la programmation dudit dispositif programmable (20) conformément à ladite partie sélectionnée desdites données.

12. Procédé selon la revendication 11, comprenant en outre la sélection locale par un utilisateur de ladite partie sélectionnée desdites données.

13. Procédé selon la revendication 12, dans lequel ladite sélection comprend ladite sélection manuelle par l'utilisateur de ladite partie sélectionnée desdites données en utilisant ledit dispositif programmable (20) comme dispositif d'entrée.

14. Procédé selon la revendication 11, comprenant en outre le filtrage desdites données conformément à un ensemble de préférences d'utilisateur afin de sélectionner ladite partie sélectionnée desdites données.

15. Procédé selon la revendication 14, comprenant la construction dudit ensemble de préférences d'utilisateur.

16. Procédé selon la revendication 11, dans lequel la transmission de ladite partie sélectionnée desdites données audit dispositif programmable (20) est exécutée en utilisant une liaison de communications sans fil (24) entre ladite station de réception et ledit dispositif programmable (20).

17. Procédé selon la revendication 16, dans lequel ladite liaison de communications sans fil comprend une liaison bidirectionnelle.

18. Procédé selon la revendication 11, dans lequel la diffusion desdites données comprend la transmission cyclique d'un carrousel de modules de données, chacun desdits modules comportant une partie desdites données.

19. Procédé selon la revendication 18, dans lequel ladite diffusion dudit carrousel de modules de données comprend la transmission desdits modules de données par l'intermédiaire du canal de diffusion d'un réseau de télévision interactif.

20. Procédé selon la revendication 17, comprenant en outre le déclenchement automatique de la transmission de ladite partie sélectionnée desdites données depuis ladite station de réception (22) vers ledit dispositif programmable (20) quand ledit dispositif programmable (20) se trouve à portée afin d'établir ladite liaison de communication sans fil avec ladite station de réception (22).

21. Procédé selon la revendication 11, comprenant en outre la transmission d'un ou de plusieurs messages audit dispositif programmable (20).

22. Jouet programmable comprenant :
une mémoire (82) configurée afin de mémoriser des données de programme :
une unité de commande (81) configurée afin d'exécuter une ou plusieurs actions basées sur lesdites données de programme mémorisées dans ladite mémoire (82); et
un récepteur (85) configuré afin de recevoir un signal de notification depuis un émetteur (67) indiquant que ledit émetteur (67) est prêt à acheminer des données de programme jusqu'au récepteur (95) dans lequel en réponse à ladite réception dudit signal de notification, ledit récepteur est configuré afin d'émettre un signal sensible à l'utilisateur afin d'indiquer que ledit jouet doit être mis en communication avec ledit émetteur (67) afin de recevoir lesdites données de programme ;
dans lequel ledit jouet est configuré afin de sélectionner une partie desdites données de programme et mémoriser ladite partie desdites données de programme dans ladite mémoire et de rejeter le reste des données de programme.

23. Système selon la revendication 1, dans lequel ladite station de réception (22) est configurée afin de transmettre ledit signal de notification avec une première portée, et de transmettre lesdites données de programme avec une deuxième portée, dans lequel ladite première portée correspond à une distance à laquelle le signal de notification peut être transmis efficacement, ladite deuxième portée correspond à une distance à laquelle lesdites données de programme peuvent être transmises efficacement, et dans lequel ladite première portée est supérieure à ladite deuxième portée.

24. Système selon la revendication 23, dans lequel la mise en communication dudit dispositif programmable (20) avec ladite station de réception (22) comprend la mise à portée dudit dispositif programmable (20) en deçà de ladite deuxième portée.

25. Procédé selon la revendication 11, dans lequel ladite station de réception (22) est configurée afin de transmettre ledit signal de notification avec une première portée, et de transmettre lesdites données de programme avec une deuxième portée, dans lequel ladite première portée correspond à une distance à laquelle le signal de notification peut être transmis efficacement, ladite deuxième portée correspond à une distance à laquelle lesdites données de programme peuvent être transmises efficacement, et dans lequel ladite première portée est supérieure à ladite deuxième portée.

26. Procédé selon la revendication 25, dans lequel la mise en communication dudit dispositif programmable (20) avec ladite station de réception (22) comprend la mise à portée dudit dispositif programmable (20) en deçà de ladite deuxième portée.
